# EUROPEAN PATENT APPLICATION

(11) **EP 4 726 790 A1**
(43) Date of publication of application: **15.04.2026**
(21) Application number: 24882675.2
(22) Date of filing: 26.09.2024
(51) Int. Cl.: H01M 4/04, F26B 9/06, F26B 25/12, F26B 25/00

(54) **APPARATUS FOR MANUFACTURING DRY ELECTRODE POWDER**

(30) Priority: 23.10.2023 KR 20230142117
(71) Applicant: LG Energy Solution, Ltd., Seoul 07335 (KR)
(72) Inventor: KANG, Yunji, Daejeon 34122 (KR); KIM, Soon, Daejeon 34122 (KR); CHUNG, Changkwon, Daejeon 34122 (KR); CHUN, Dong Jae, Daejeon 34122 (KR); LEE, Jeong Hyeon, Daejeon 34122 (KR)
(74) Representative: Plasseraud IP
(86) International application number: PCT/KR2024/014579
(87) International publication number: WO 2025/089646

(57) **Abstract**

An apparatus for manufacturing a dry electrode powder according to an embodiment of the present disclosure comprises: a drying chamber in which a wet electrode slurry is dried and manufactured into a dry electrode powder; and a spray unit that sprays the electrode slurry into the inside of the drying chamber, wherein the inner wall surface of the drying chamber may include a plurality of protrusions.

## Description

### [TECHNICAL FIELD]

### Cross-Reference to Related Application(s)

This application claims priority to and the benefit of Korean Patent Application No. 10-2023-0142117, filed on October 23, 2023, with the Korean Intellectual Property Office, the disclosure of which is incorporated herein by reference in its entirety.

The present disclosure relates to an apparatus for manufacturing a dry electrode powder used in its dry manufacture, and more particularly, to a manufacturing apparatus that can increase the yield of a dry electrode powder and improve the quality of the manufactured dry electrode powder.

### [BACKGROUND]

The use of mobile devices such as cell phones, laptops, camcorders and digital cameras, and energy storage systems(ESS) has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles(EV), hybrid electric vehicles(HEV), plug-in hybrid electric vehicles(P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium secondary batteries are emerging as the most popular, as they are freely rechargeable, have low self-discharge rates, and have high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are disposed with a separator interposed between them, and an exterior material, i.e., battery case, which hermetically houses the electrode assembly together with an electrolyte.

The manufacturing process of such a lithium secondary battery is roughly classified into an electrode process, an assembly process, and a formation process. The electrode process may be divided into an active material mixing process, an electrode coating process, a pressing process, a slitting process, a winding process, and the like. Among these processes, the electrode coating process is divided into a wet electrode process that provides an active material slurry to an electrode current collector, and a dry electrode process that provides an active material in the solid state to a current collector.

The solid-state dry electrode powder used in a dry electrode process may be obtained by providing an electrode active material, a conductive material and a binder in the form of solid and uniformly mixing them, or may be manufactured in the form of powder by dissolving an active material, a conductive material and a binder in a solvent to produce a wet slurry form, and then drying the slurry form in a drying chamber.

Meanwhile, in the former case, when the electrode active material, the conductive agent and the binder are respectively dry-mixed without a solvent in a solid state, the electrode active material, the conductive material, and the binder may not be mixed uniformly.

Further, in the latter case, the electrode slurry provided in the form of a wet slurry may adhere to the wall inside the drying chamber in a lumpy state. If the wet electrode slurry aggregates and adheres to the wall surface inside the drying chamber, the yield of the dry electrode powder decreases. In addition, if the dry lump of the electrode slurry that was aggregated and adhered to the inner wall surfaces falls off and mixes with the electrode powder, a large variation occurs in the particle size of the manufactured electrode powder, which may cause a phenomenon in which the quality of the electrode manufactured by a dry method also deteriorate.

### [DETAILED DESCRIPTION OF THE INVENTION]

### [Technical Problem]

It is an object of the present disclosure to provide an apparatus for manufacturing a dry electrode powder that can increase the yield and manufacture the electrode powder into a uniform particle size.

However, the technical objects solved by the embodiments of the present disclosure are not limited to those disclosed above, and may be expanded in various ways within the scope of the technical idea included in the present disclosure.

### [Technical Solution]

An apparatus for manufacturing a dry electrode powder according to an embodiment of the present disclosure comprises: a drying chamber in which a wet electrode slurry is dried and manufactured into a dry electrode powder; and a spray unit that sprays the electrode slurry into the inside of the drying chamber, wherein the inner wall surface of the drying chamber may include a plurality of protrusions.

In order to prevent the electrode slurry sprayed into the drying chamber from aggregating and adhering to the inner wall surface of the drying chamber, the inner wall surface of the drying chamber may include a plurality of protrusions, thereby increasing a surface roughness of the inner wall surface of the drying chamber.

The electrode slurry sprayed into the drying chamber may be dried and formed into an electrode powder, which may be then accumulated on a lower surface of the drying chamber.

The plurality of protrusions may be uniformly distributed.

The plurality of protrusions may be distributed spaced at a predetermined distance between them.

The spacing between adjacent protrusions may be 0.5 to 1 times the length of the protrusions in a horizontal direction.

The plurality of protrusions may be arranged in a dot array on the inner wall surface of the drying chamber.

Each of the plurality of protrusions may include a column shape.

Each of the plurality of protrusions may include a square column shape.

The plurality of protrusions may be arranged on a side wall among the inner wall surfaces of the drying chamber.

When the protrusions are viewed from the inside of the drying chamber, the sum of the areas of the plurality of protrusions may be 50% or less of the area of the inner wall surface of the drying chamber.

The sum of the areas of the uppermost surfaces of the plurality of protrusions may be 50% or less of the area of the inner wall surface of the drying chamber.

The inner wall surface of the drying chamber may have an embossed structure that protrudes inward.

The electrode slurry may be one in which the electrode active material, the conductive material, and the binder are dispersed in a solvent, and the electrode slurry may be sprayed into the inside of the drying chamber in the form of a mist and then formed into the electrode powder.

The upper surface of the drying chamber may include an inflow port through which the electrode slurry is supplied, the lower surface of the drying chamber may include a discharge port through which the electrode powder is discharged, and a piping for transporting the electrode slurry may be connected through the inflow port, and the spray unit may be coupled to the end of the piping.

The apparatus for manufacturing a dry electrode powder may further comprise a temperature control device for adjusting the temperature of the drying chamber.

### [Advantageous Effects]

According to embodiments of the present disclosure, it is possible to increase the yield when manufacturing a dry electrode powder as well as to reduce the particle size deviation of the dry electrode powder and improve the quality of the manufactured electrode, thereby improving the quality of the final manufactured electrode assembly and battery cells.

The effects of the present disclosure are not limited to the effects mentioned above and additional other effects not described above will be clearly understood from the description of the appended claims by those skilled in the art.

### [BRIEF DESCRIPTION OF THE DRAWING]

FIG. 1 is a schematic diagram of an apparatus for manufacturing a dry electrode powder according to an embodiment of the present disclosure.
FIG. 2 is a schematic diagram of a plurality of protrusions provided on the inner wall surface of the drying chamber of FIG. 1.
FIG. 3 is a modified example of the protrusion of FIG. 2.
FIG. 4 is another modified example of the protrusion of FIG. 2.
FIG. 5 exemplarily shows a case where the electrode slurry adheres to the protrusions provided on the inner wall surface of the drying chamber of FIG. 1.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, specific embodiments of the present invention will be described with reference to the accompanying drawings.

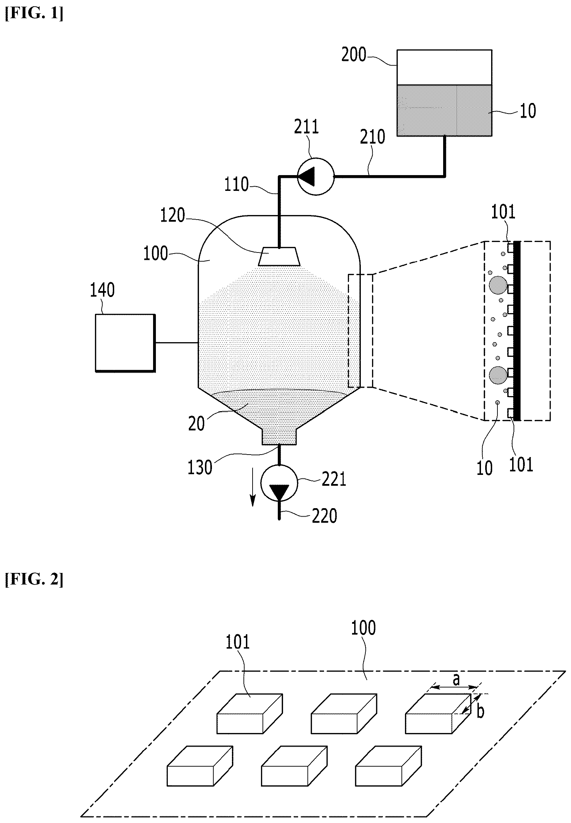

FIG. 1 is a schematic diagram of an apparatus for manufacturing a dry electrode powder according to an embodiment of the present disclosure.

An apparatus for manufacturing a dry electrode powder according to an embodiment of the present disclosure includes a drying chamber 100, wherein an electrode mixture, which is a mixture of an electrode active material, a conductive material and a binder, is uniformly dispersed in a solvent (water or organic solvent) to prepare a slurry 10 (hereinafter, "electrode slurry"), and the electrode slurry is supplied to the inside of a drying chamber 100, dried and manufactured into a powder. In the electrode mixture in the form of a slurry provided to the drying chamber 100, other materials may be optionally further mixed in addition to the mixture of the electrode active material, conductive material and binder.

For reference, when the electrode active material, the conductive material and the binder are respectively dry-mixed without a solvent in a solid state, the electrode active material, the conductive material and the binder may not be uniformly mixed. Thus, according to the present disclosure, the electrode active material, the conductive material and the binder are, first, uniformly dispersed in a solvent to prepare a wet electrode slurry 10, which is then sprayed and dried in a drying chamber 100 to manufacture a dry electrode powder 20. In addition, according to the present disclosure, the wet electrode slurry 10 does not adhere in lumps to the inner wall surface of the drying chamber 100, but a desired electrode powder may be manufactured so that the particle size of the final manufactured electrode powder 20 is uniform as a whole. This will be described in detail below.

First, the upper surface of the drying chamber 100 includes an inflow port 110, and the lower surface includes a discharge port 130. As illustrated in FIG. 1, the shape of the drying chamber 100 is generally cylindrical, but the upper surface may be rounded or chamfered at the edge. Further, the lower surface may include a sloped surface toward the discharge port 130.

When the inner wall surface of the drying chamber 10 is formed at a right angle between the upper surface and the side surface, there may be cases where a part of the electrode slurry 10 is aggregated and sandwiched at the edge between the upper surface and the side surface. The edge of the upper surface of the drying chamber 100 (i.e., the edge where the upper surface and the side surface contact each other) is subjected, for example, to rounding processing, i.e., the upper surface and the side surface are connected by a gently curved surface, thereby capable of preventing such cases. Alternatively, the edge between the upper surface and the side surface of the drying chamber 100 may be formed into a chamfered shape.

The upper surface of the drying chamber 100 includes an inflow port 110 of the opening shape, and a piping 210 extended from the slurry supply unit 200 is connected to the inflow port 110, or connected to the inside of the drying chamber 100 through the inflow port 110. The slurry supply unit 200 stores the electrode slurry 10 and then transfers the electrode slurry 10 through the piping 210 and supplies it to the inside of the drying chamber 100. The end of the piping 210 connected to the inflow port 110 of the upper surface of the drying chamber 100 is provided with a spray unit 120 that sprays the electrode slurry 10 into the inside of the drying chamber 100. The spray unit 120 may spray the electrode slurry 10 in the form of mist. The piping 210 may be provided with at least one pump 211 and at least one valve (not shown).

For example, as shown in FIG. 1, the spray unit 120 may be arranged at the center of the upper part of the drying chamber 100, and may uniformly spray the electrode slurry 10 into the inside of the cylindrical drying chamber 100.

The spray unit 120 applied to the present disclosure may be sufficient if it can uniformly spray the electrode slurry 10 into fine-sized particles so that the electrode slurry 10 can be dried inside the drying chamber 100, and the type, shape, number and the like of the spray unit 120 are not limited.

Further, the lower surface of the drying chamber 100 includes a discharge port 130 of the opening shape, wherein the discharge port 130 may be located, for example, at the center of the lower surface. The lower surface of the drying chamber 100 may include, for example, a sloped surface in which the height becomes lower toward the discharge port 130. Thereby, the electrode powder 20 that gathers at the lower part of the drying chamber 100 may slide along the sloped surface of the lower surface by gravity and move to the discharge port 130. A piping 220 is connected to the discharge port 130, and the electrode powder 20 is transferred to a subsequent process through the piping 220. The piping 220 may be provided with at least one pump 221 and at least one valve (not shown).

The drying chamber 100 is further provided with a temperature control device 140, which can adjust the temperature inside the drying chamber 100 so that the electrode slurry 10 can be dried inside the drying chamber 100. Although not shown in the present disclosure, for example, a heating unit (heat source, not shown) connected to the temperature control device 140 may be disposed on the outer wall surface of the drying chamber 100 to heat the inside of the drying chamber 100 to a high temperature. It is sufficient if the electrode slurry 10 can be sprayed into the inside of the drying chamber 100 and dried in the form of a solid, whereby the types of the temperature control device 140 and the heating unit, and the method of adjusting the temperature inside the drying chamber 100 are not limited. In addition, various control devices (not shown), such as a pressure control device, can be further connected to the drying chamber 100, so that the process conditions inside the drying chamber 100 can be adjusted in accordance with the situation.

The temperature and/or pressure inside the drying chamber 100 is sufficient if they are any temperature and/or pressure at which the electrode slurry 10 can be dried and produced into an electrode powder 20, and may be variously set under various conditions depending on the environment in which the present disclosure is realized, for example, depending on the type, supply amount, and spray amount of the sprayed electrode slurry 10. The temperature inside the drying chamber 100 is also a high temperature that can sufficiently dry the electrode slurry 10, and the temperature can be adjusted in accordance with the process conditions, such as increasing the temperature inside with the temperature control device 140 described above.

The particle size of the electrode slurry 10 sprayed into the inside of the drying chamber 100 by the spray unit 120 may be, for example, 10 micrometers to 250 micrometers, or may be, for example, 40 micrometers to 150 micrometers. The sprayed electrode slurry 10 changes in the form of a solid while being dried inside the drying chamber 100. At this time, in the inside of the drying chamber 100, the sprayed electrode slurry 10 changes in the form of a solid while being dried. At this time, it is preferable that the electrode slurry 10 sprayed into the inside of the drying chamber 100 does not contact the inner wall of the drying chamber 100. However, some of the sprayed electrode slurry 10 may undesirably co ntacts the inner wall of the drying chamber 100 and aggregate. The particle size of the aggregated electrode powder 20 may be, for example, 300 micrometers to 1500 micrometers. When the electrode slurry 10 aggregates on the inner wall surface of the drying chamber 100 to form electrode powder 20 of a specific size, it falls to the lower part of the drying chamber 100 by gravity and moves to the next process through the discharge port 130.

Meanwhile, as shown in the enlarged view, the inner wall surface of the drying chamber 100 is provided with a plurality of protrusions 101. Therefore, the inner wall surface of the drying chamber 100 can be formed in an embossed shape that protrudes into the inside of the drying chamber 100. The plurality of protrusions 101 are uniformly distributed on the inner wall surface of the drying chamber 100, and adjacent protrusions 101 are spaced apart from each other by a predetermined distance.

The protrusions 101 may be arranged over the entire inner wall surface of the drying chamber 100. Alternatively, they may be arranged only on the side surfaces (side walls) of the inner wall surface of the drying chamber 100. The side wall means a surface of the inner wall surface of the drying chamber 100 excluding the upper surface and the lower surface. However, the present disclosure is not limited thereto, and in some cases, a plurality of protrusions 101 may be further arranged on the upper surface or the lower surface of the inner wall surface of the drying chamber 100, if necessary for the process.

In the example of FIG. 1, the lower surface of the drying chamber 100 means a sloped portion around the discharge port 130 excluding the opening-shaped discharge port 130 (i.e., a sloped portion from the inner wall surface of the cylinder shape to the discharge port 130).

According to the present disclosure, since the inner wall surface of the drying chamber 100 is provided with a plurality of protrusions 101, the surface roughness of the inner wall surface of the drying chamber 100 is increased. Thereby, it is possible to prevent a phenomenon in which the wet-sprayed electrode slurry 10 aggregates and adheres to the inner wall surface of the drying chamber 100. In a greater detail, as described above in the prior art, if the electrode slurry 10 aggregates and adheres to the inner wall surface of the drying chamber 100, the yield of the electrode powder 20 decreases. In addition, if the dry lumps of the electrode slurry that have aggregated and adhered to the inner wall surface is discharged together with the electrode powder 20 through the discharge port 130, a large deviation occurs in the particle size of the manufactured electrode powder 20, which may cause a phenomenon in which the quality of the electrode manufactured by a dry method also deteriorate. However, according to the present disclosure, since a plurality of protrusions 101 are provided on the inner wall surface of the drying chamber 100, problems caused in the prior art can be solved. When the protrusions 101 are viewed from the inside of the drying chamber 100, the sum of the areas of the plurality of protrusions 101 may be, for example, 25% or more and 50% or less, or for example, 30% or more and 50% or less, or for example, 35% or more and 50% or less, of the areas of the side wall (i.e., excluding the upper surface or the lower surface of the drying chamber 100) provided with a plurality of protrusions 101 among the inner wall surfaces of the drying chamber 100. Further, in a greater detail, when the plurality of protrusions 101 have a column shape as described below, the sum of the areas of the uppermost surfaces of the plurality of protrusions 101 may be, for example, 25% or more and 50% or less, or for example, 30% or more and 50% or less, or for example, 35% or more and 50% or less, of the areas of the side wall (i.e., excluding the upper surface or the lower surface of the drying chamber 100) provided with a plurality of protrusions 101 among the inner wall surfaces of the drying chamber 100. However, if a plurality of protrusions 101 are hemispherical in shape as described below, or have a column shape but the corners of the uppermost surface have a chamfered shape or are subjected to rounding processing, more precisely, the sum of the areas of the horizontal cross section of the protrusions 101 may be 50% or less of the areas of the inner wall surface of the drying chamber 100. Here, the horizontal cross section of the protrusions 101 means the cross section in a direction parallel to the inner wall surface of the drying chamber 100 where the protrusions 101 are located.

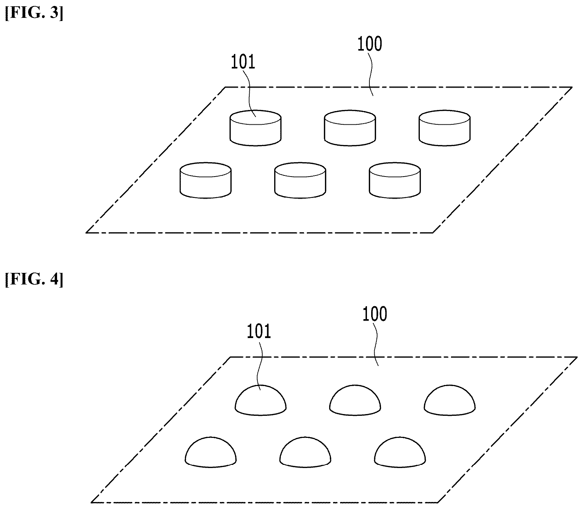

FIG. 2 is a schematic diagram of a plurality of protrusions provided on the inner wall surface of the drying chamber of FIG. 1. FIG. 3 is a modified example of the protrusion of FIG. 2. FIG. 4 is another modified example of the protrusion of FIG. 2.

As shown in FIGS. 2 to 4, when the inner wall surface of the drying chamber 100 is viewed from the inside of the drying chamber 100, a plurality of protrusions may be arranged in a dot array.

The protrusion 101 may include a column shape. For example, the protrusion 101 may be a column shape extending toward the inside of the drying chamber 100 on the inner wall surface of the drying chamber 100. For example, as shown in FIG. 2, the protrusion 101 may be a square column shape. At this time, the aspect ratio a/b of the protrusion 101 means the ratio between the horizontal length a of the protrusion 101 and the vertical length b of the protrusion 101. Since the surface roughness of the inner wall surface of the drying chamber 100 changes depending on the aspect ratio a/b of the protrusion 101, the shape and/or size of the electrode slurry 10 that contacts the inner wall surface of the drying chamber 100 also changes accordingly. In a greater detail, the shape and size of the electrode slurry 10 that contacts the inner wall surface of the drying chamber 100 varies depending on the aspect ratio a/b of the protrusions 101. Depending on the surface roughness of the inner wall surface of the drying chamber 100, the electrode slurry 10 that co ntacts the inner wall surface of the drying chamber 100 may be a perfectly spherical, or the electrode slurry 10 that contacts the inner wall surface of the drying chamber 100 may be a spread and hemispherical shape. As the shape of the electrode slurry 10 differs, its size also differs.

Meanwhile, as described above, it is preferable that the electrode slurry 10 does not co ntact the inner wall surface of the drying chamber 100. However, even if the electrode slurry 10 unintentionally contacts the inner wall surface, it is preferable that the electrode slurry 10 that contacts the inner wall surface of the drying chamber 100 is formed in a spherical shape as much as possible, so that it does not aggregate into a large lump and can be immediately detached from the inner wall surface of the drying chamber 100.

Here, the vertical direction of the protrusion 101 means the height direction of the drying chamber 100. In such a case, the horizontal direction of the protrusion 101 is a direction orthogonal to the vertical direction of the protrusion 101, which means the tangential direction of the circumference of the drying chamber 100.

The aspect ratio a/b of the protrusion 101 may be, for example, 0.5 to 2, or may be, for example, 1 to 1.5. In the latter implementation environment, the value of the aspect ratio a/b is closer to 1, the shape of the electrode slurry 10 that contacts the inner wall surface of the drying chamber 100 may be closer to a sphere. When the value of the aspect ratio a/b is 1, the shape of the electrode slurry 10 that contacts the inner wall surface may become substantially spherical. Conversely, as the value of the aspect ratio a/b increases, the shape of the electrode slurry 10 that contacts the inner wall surface of the drying chamber 100 becomes closer to a hemispherical shape, and when the value of the aspect ratio a/b is 1.5, the shape of the electrode powder 20 may be substantially hemispherical. However, the present disclosure is not limited to those described above, and the shape of the electrode powder 20 according to the numerical range of the aspect ratio a/b and the value of the aspect ratio a/b may be variously changed depending on the environment in which the present disclosure is realized or the composition of the electrode slurry.

Further, as the height of the protrusion 101 increases, the shape of the electrode powder 20 becomes closer to a sphere until the height of the protrusion 101 reaches the allowable limit height. The allowable limit height of the height of the protrusion 101 may be, for example, 2.5 times the vertical length b of the protrusion 101, and without being limited thereto, it may be variously set in accordance with the environment in which the present disclosure is realized.

Further, the spacing between adjacent protrusions 101 may be, for example, 0.5 to 1 times the length of the protrusion 101 in the horizontal (a) direction. Thereby, it is possible to prevent the sprayed electrode slurry 10 from being sandwiched and adhered between adjacent protrusions 101.

Meanwhile, the present disclosure is not limited to those described above, and the protrusion 101 may have a cylindrical shape (see FIG. 3) or a hexagonal column shape. Alternatively, in some cases, the protrusion 101 may have a column shape, but the corner of the uppermost surface may have a chamfered shape or a rounded shape. The protrusion 101 itself may have a hemispherical shape (see FIG. 4) or an elliptical sphere shape, or the protrusion 101 itself may have a cone or a square pyramid shape, etc. Thus, the present disclosure can be modified and changed in various ways depending on the environment and process conditions in which it is realized.

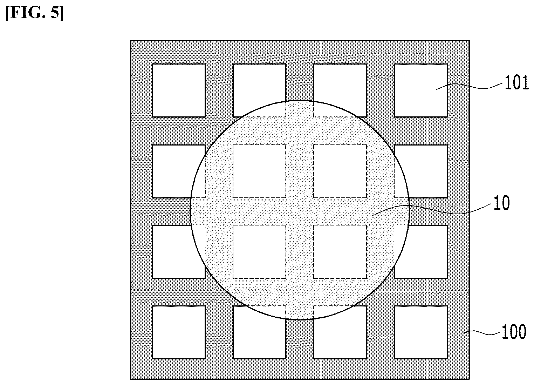

FIG. 5 exemplarily shows a case where the electrode slurry 10 adheres to the protrusions 101 provided on the inner wall surface of the drying chamber 100 of FIG. 1. This illustrates a case where the electrode slurry occupies, for example, about 60%, and aggregates, based on 16 protrusions 101, but this is illustrated as one embodiment, and the present disclosure is not limited to those illustrated.

The electrode referred to in the specification of the present disclosure may be a positive electrode or a negative electrode. That is, the manufacturing process of the dry electrode powder according to the present disclosure is not particularly limited to the positive electrode and the negative electrode, can be easily applied to the manufacture of any dry electrode powder, and can manufacture different electrodes depending on the material (e.g., positive electrode active material or negative electrode active material) used for manufacturing each electrode. Therefore, the term "electrode" used for electrode, electrode active material, etc., in the specification of the present disclosure may mean both a positive electrode and a negative electrode, unless specifically defined.

The positive electrode active material may be any material without limitation as long as the material contains lithium and thus can occlude and release lithium ions. For example, the positive electrode active material may include a layered compound such as lithium cobalt oxide(LiCoO₂) and lithium nickel oxide(LiNiO₂) or a compound substituted with one or more transition metals; lithium manganese oxides such as the chemical formula Li₁₊ₓMn₂₋ₓO₄ (where x is 0 ~ 0.33), LiMnO₃, LiMn₂O₃, LiMnO₂; lithium copper oxide(Li₂CuO₂); vanadium oxides such as LiV₃O₈, LiFe₃O₄, V₂O₅, and Cu₂V₂O₇; a Ni-site type lithium nickel oxide represented by chemical formula LiNi₁₋ₓMₓO₂ (where M=Co, Mn, Al, Cu, Fe, Mg, B or Ga, and x=0.01 ~ 0.3); lithium manganese composite oxide represented by chemical formulae LiMn₂₋ₓMₓO₂ (where M = Co, Ni, Fe, Cr, Zn or Ta, and x = 0.01 ~ 0.1) or Li₂Mn₃MO₈ (where, M = Fe, Co, Ni, Cu or Zn); lithium manganese composite oxide having a spinel structure represented by chemical formula LiNiₓMn₂₋ₓO₄; LiMn₂O₄ in which a part of Li in the chemical formula is substituted with an alkaline earth metal ion; disulfide compound; Fe₂(MoO₄)₃, or the like, but are not limited thereto. Further, the positive electrode may have a positive electrode mixture layer comprising metallic lithium, a carbon material, a metal compound or a mixture thereof. The metal compound may be a compound containing one or more metal elements selected from the group consisting of Si, Ge, Sn, Pb, P, Sb, Bi, Al, Ga, In, Ti, Mn, Fe, Co, Ni, Cu, Zn, Ag, Mg, Sr, and Ba, or a mixture thereof.

The negative electrode may be manufactured by providing a negative electrode active material onto a negative electrode current collector and rolling it, or may be manufactured by a dry method similarly to the above-mentioned manufacturing process of the positive electrode, and may optionally further contain a conductive material, an organic binder polymer, an additive, and the like as in the positive electrode, if necessary.

In addition, the negative electrode active material may include, for example, a carbon material and a silicon material. The carbon material means a carbon material containing carbon atoms as a main component, wherein the carbon material may include graphite having a complete layered crystal structure such as natural graphite, soft carbon having a low-crystalline layered crystal structure (a structure in which hexagonal honeycomb shaped planes of carbon are arrayed in a layered form), and hard carbon having a structure in which the above structures are mixed with non-crystalline parts, artificial graphite, expanded graphite, carbon fiber, hardly graphitized carbon, carbon black, acetylene black, Ketjen black, carbon nanotube, fullerene, activated carbon, graphene, carbon nanotube, and the like, and preferably, may include one or more selected from the group consisting of natural graphite, artificial graphite, and carbon nanotube. More preferably, the carbon material includes natural graphite and/or artificial graphite, and may include one or more among carbon blacks and carbon nanotubes together with the natural graphite and/or artificial graphite. In this case, the carbon material may include 0.1 to 10 parts by weight of carbon black and/or carbon nanotubes based on 100 parts by weight of the total carbon material, and more specifically, 0.1 to 5 parts by weight; or 0.1 to 2 parts by weight of carbon black and/or carbon nanotube based on 100 parts by weight of the total carbon material.

Further, the silicon material is a particle including silicon(Si) as a main component, which is a metal component, and may include one or more of silicon (Si) particles and silicon oxide (SiO_{X}, where 1≤X≤2) particles. As an example, the silicon material may include silicon (Si) particles, silicon monoxide (SiO) particles, silicon dioxide (SiO₂) particles, or a mixture of these particles.

Further, according to the present disclosure, the current collector includes a metal plate having electrical conductivity and may be one selected suitably depending on polarity of electrodes known in the field of secondary batteries.

Further, according to the present disclosure, the conductive material is not particularly limited, as long as it causes no chemical change in the corresponding battery and has conductivity.

Further, according to the present disclosure, the binder resin is not particularly limited as long as it is an ingredient that assists binding of the active material with the conductive material, and binding to the current collector.

The electrode produced from the dry electrode powder manufactured by applying the apparatus for manufacturing a dry electrode powder according to the embodiments of the present disclosure described above can be included in a secondary battery, and a plurality of such secondary batteries may be gathered together to form a battery module. The battery modules can be mounted together with various control and protection systems such as a BMS (battery management system), and a cooling system to form a battery pack.

The secondary battery, the battery module or the battery pack can be applied to various devices. Specifically, it can be applied to vehicle means such as an electric bike, an electric vehicle, and a hybrid electric vehicle, but are not limited thereto, and can be applied to various devices capable of using a secondary battery.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

### [Description of Reference Numerals]

10: electrode slurry
20: electrode powder
100: drying chamber
101: protrusion
110: inflow port
120: spray unit
130: discharge port
140: temperature control device
200: slurry supply unit
210,220: piping
211,221: pump

## Claims

1. An apparatus for manufacturing a dry electrode powder, comprising:
a drying chamber in which a wet electrode slurry is dried and manufactured into a dry electrode powder; and
a spray unit that sprays the electrode slurry into the inside of the drying chamber,
wherein an inner wall surface of the drying chamber includes a plurality of protrusions.

2. The apparatus for manufacturing a dry electrode powder according to claim 1,
wherein in order to prevent the electrode slurry sprayed into the drying chamber from aggregating and adhering to the inner wall surface of the drying chamber, the inner wall surface of the drying chamber includes a plurality of protrusions, thereby increasing a surface roughness of the inner wall surface of the drying chamber.

3. The apparatus for manufacturing a dry electrode powder according to claim 1,
wherein the electrode slurry sprayed into the drying chamber is dried and formed into an electrode powder, which is then accumulated on a lower surface of the drying chamber.

4. The apparatus for manufacturing a dry electrode powder according to claim 1,
wherein the plurality of protrusions are uniformly distributed.

5. The apparatus for manufacturing a dry electrode powder according to claim 1,
wherein the plurality of protrusions are distributed spaced at a predetermined distance between them.

6. The apparatus for manufacturing a dry electrode powder according to claim 5,
wherein a spacing between adjacent protrusions is 0.5 to 1 times the length of the protrusions in a horizontal direction.

7. The apparatus for manufacturing a dry electrode powder according to claim 1,
wherein the plurality of protrusions are arranged in a dot array on the inner wall surface of the drying chamber.

8. The apparatus for manufacturing a dry electrode powder according to claim 1,
wherein each of the plurality of protrusions includes a column shape.

9. The apparatus for manufacturing a dry electrode powder according to claim 8,
wherein each of the plurality of protrusions includes a square column shape.

10. The apparatus for manufacturing a dry electrode powder according to claim 1,
wherein the plurality of protrusions are arranged on a side wall among the inner wall surfaces of the drying chamber.

11. The apparatus for manufacturing a dry electrode powder according to claim 1,
wherein when the protrusions are viewed from the inside of the drying chamber, the sum of the areas of the plurality of protrusions is 50% or less of the area of the inner wall surface of the drying chamber.

12. The apparatus for manufacturing a dry electrode powder according to claim 1,
wherein the sum of the areas of the uppermost surfaces of the plurality of protrusions is 50% or less of the area of the inner wall surface of the drying chamber.

13. The apparatus for manufacturing a dry electrode powder according to claim 1,
wherein the inner wall surface of the drying chamber has an embossed structure that protrudes inward.

14. The apparatus for manufacturing a dry electrode powder according to claim 1,
wherein the electrode slurry is one in which an electrode active material, a conductive material, and a binder are dispersed in a solvent, and
the electrode slurry is sprayed into the inside of the drying chamber in the form of a mist and then formed into the electrode powder.

15. The apparatus for manufacturing a dry electrode powder according to claim 1,
wherein an upper surface of the drying chamber includes an inflow port through which the electrode slurry is supplied,
a lower surface of the drying chamber includes a discharge port through which the electrode powder is discharged, and
a piping for transporting the electrode slurry is connected through the inflow port, and the spray unit is coupled to the end of the piping.

16. The apparatus for manufacturing a dry electrode powder according to claim 1,
further comprising a temperature control device for adjusting the temperature of the drying chamber.
